# EUROPÄISCHE PATENTSCHRIFT

(11) **EP 1 688 232 B1**
(45) Veröffentlichungstag und Bekanntmachung des Hinweises auf die Patenterteilung: **14.03.2012**
(21) Anmeldenummer: 06101000.5
(22) Anmeldetag: 30.01.2006
(51) Int. Cl.: B29C 45/16, B29C 45/06

(54) **Spritzgiessmaschine**
Injection moulding machine
Machine de moulage par injection

(30) Priorität: 03.02.2005 DE 102005005202
(43) Veröffentlichungstag der Anmeldung: 09.08.2006
(73) Patentinhaber: Sumitomo (SHI) Demag Plastics Machinery GmbH, 90571 Schwaig (DE)
(72) Erfinder: Rahnhöfer, Klaus, 91186 Büchenbach (DE)
(74) Vertreter: Rau, Manfred

(56) Entgegenhaltungen:
- WO-A-2006/018364
- KEUSGEN H: "DIE HEISS-KALTE LOESUNG 2-K-WERKZEUG FUER TEILE AUS THERMOPLAST UN LSR" KUNSTSTOFFE, CARL HANSER VERLAG, MUNCHEN, DE, Bd. 91, Nr. 3, März 2001 (2001-03), Seiten 92-94, XP001039127 ISSN: 0023-5563
- KEUSGEN H: "Pneumatische Zwangsentformung" KUNSTSTOFFE, CARL HANSER VERLAG, MUNCHEN, DE, Bd. 90, Nr. 4, April 2000 (2000-04), Seiten 72-74, XP002358479 ISSN: 0023-5563

## Beschreibung

Die Erfindung betrifft eine Spritzgießmaschine mit einer maschinenseitigen Auswerferplatte und einer Werkzeugaufspannplatte, wobei die Auswerferplatte relativ zu der Werkzeugaufspannplatte verfahrbar ist, und einer Indexplatte eines Spritzgießwerkzeugs, die mit einer Welle verbunden oder verbindbar ist.

Für die Herstellung von mehrkomponentigen oder mehrfarbigen Spritzgussteilen sind verschiedene Verfahren bekannt. Beim sogenannten Indexplattenverfahren ist das Spritzgießwerkzeug in der Weise modifiziert, dass eine zusätzliche dritte Platte zwischen zwei Basiswerkzeughälften angeordnet ist, die sogenannte Indexplatte. Diese ist um eine zentrale Achse drehbar und kann axial in Maschinenlängsrichtung verschoben werden. Die Indexplatte bildet einen mittleren Teil der Kavität, in der ein Vorspritzling entsteht, der unverändert bleiben kann. Nach dem Abheben vom feststehenden Werkzeugteil dreht die Indexplatte um einen festen Winkel, beispielsweise 120° oder 180°, und der Vorspritzling wird in eine weitere Kavität umgesetzt, in der eine weitere Komponente angespritzt werden kann. Durch den axialen Hub, dem die Indexplatte vor dem Drehen unterworfen wird, ist es möglich, die Vorspritzlinge, anders als bei auf Drehtischen angeordneten Werkzeughälften, in eine Kavität umzusetzen, deren Kontur sich auch auf der der beweglichen Werkzeugaufspannplatte zugewandten Seite ändert, so dass beispielsweise Hinterspritzungen möglich werden. Nach dem Drehen wird die Indexplatte axial wieder in die entsprechenden Kavitäten zurückgezogen.

Aus der DE 101 45 461 A1 sind verschiedene Varianten von Spritzgießmaschinen mit einer Indexplatte bekannt.

Bei der in den Figuren 1 bis 5 von DE 101 45 461 A1 beschriebenen Variante ist auf der beweglichen Werkzeugaufspannplatte eine Dreheinheit befestigt, die im wesentlichen aus einem Gehäuse besteht, in dem ein Zahnrad drehbar gelagert ist. Im Innern ist das Zahnrad hohl und mit einem Vielnutenprofil ausgeführt. Die Drehwelle der Indexplatte weist ein hierzu passendes Vielnutenprofil auf und verläuft durch das Zahnrad hindurch. Mit ihrem werkzeugseitigen Ende ist die Drehwelle mit der Indexplatte verbunden und mit ihrem gegenüberliegenden Ende an einen Linearantrieb angeschlossen, beispielsweise an einen Hydraulikzylinder, so dass die Indexplatte aus dem feststehenden Werkzeugteil aus- und eingefahren werden kann. Im rechten Winkel zur Maschinenlängsachse ist in dem Gehäuse der Dreheinheit eine Zahnstange angeordnet, die im Eingriff mit dem Zahnrad ist und mittels Hydraulikzylindern vor und zurückbewegt werden kann. Auf diese Weise kann das Zahnrad in eine Drehung um einen Winkel entsprechend dem Hub der Zahnstange versetzt werden und zwar stets abwechselnd im Uhrzeigersinn und in die Gegenrichtung.

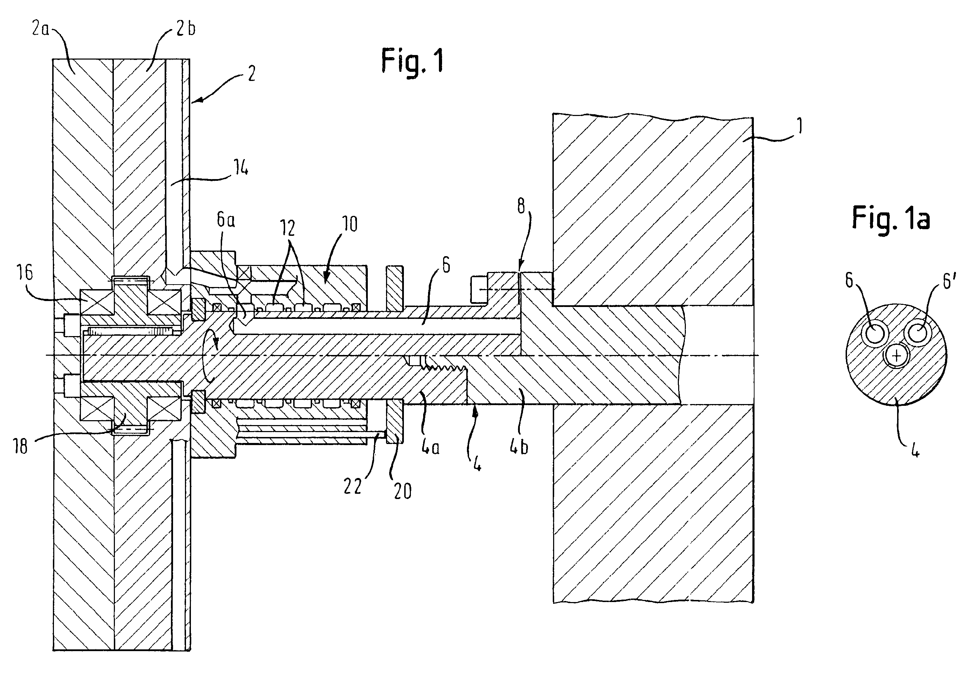

Bei den in den Figuren 6 bis 11 von DE 101 45 461 A1 beschriebenen Varianten wird für die Drehbewegung der Indexplatte ein Hydro- oder Elektromotor vorgesehen, der in eine Ausnehmung der beweglichen Werkzeugaufspannplatte eingelassen ist und der eine Hohlwelle mit einem Vielnutenprofil entsprechend dem Vielnutenprofil der Drehwelle der Indexplatte aufweist. Im Unterschied zu den Figuren 1 bis 5 kann nun auf eine separate Dreheinrichtung mit Zahnstange-Zahnrad-Trieb zwischen dem Spritzgießwerkzeug und der Aufspannplatte verzichtet werden. Der Motor hat außerdem den Vorteil, dass die Drehwelle der Indexplatte in jede beliebige Richtung gedreht und in jeder Winkelstellung angehalten werden kann. Insbesondere kann - im Gegensatz zum Zahnstange-Zahnrad-Trieb - die Indexplatte bedarfsweise stets in eine Richtung gedreht werden.

Es ist auch bekannt, zwischen Werkzeughälfte und beweglicher Werkzeugaufspannplatte eine zusätzliche Zwischenplatte vorzusehen, in der eine Mutter mit Vielnutenprofil drehbar gelagert ist, das mit einem Vielnutenprofil der Drehwelle der Indexplatte im Eingriff steht. Ein Antrieb zum rotatorischen Antreiben der Mutter ist auf dieser Zwischenplatte gelagert. Nachteilig hieran ist, dass diese Zwischenplatte zwischen Werkzeug und Werkzeugaufspannplatten vorzusehen ist und dadurch die für ein Werkzeug verfügbare Einbauhöhe abnimmt, auch verringert sich der Öffnungshub einer Schließeinheit, also der maximale Abstand, der zwischen den beiden Werkzeughälften realisiert werden kann, entsprechend.

Des weiteren kann ein Drehantrieb zum rotatorischen Antreiben der Drehwelle der Indexplatte auf der dem Spritzgießwerkzeug abgewandten Rückseite der beweglichen Werkzeugaufspannplatte vorgesehen werden. Nachteilig hieran ist der große Platzbedarf, der beispielsweise bei der Verwendung einer sogenannten maschinenseitigen Auswerferplatte auf derselben Seite der Werkzeugaufspannplatte deren Größe bzw. Verfahrweg in axialer Richtung relativ zur Werkzeugaufspannplatte einschränkt.

Ein Drehantrieb kann auch im Werkzeug angebaut sein, was sich bei Werkzeugwechseln als teuer herausgestellt hat, da jedes Werkzeug einen entsprechenden Drehantrieb aufweisen oder doch zumindest mit einem solchen ausgestattet können werden muss. Dies schränkt zudem den werkzeugseitig verfügbaren Raum ein.

Es gibt auch Lösungen, bei denen der Drehantrieb als Ringmotor ausgebildet ist und in einer Aussparung der beweglichen Werkzeugaufspannplatte versenkt aufgenommen ist. Hierfür sind Spezialanfertigungen oder doch zumindest Anpassungen an der Werkzeugaufspannplatte notwendig, eine Spritzgießmaschine kann also nur schwierig nachträglich mit einer solchen Lösung ausgestattet werden.

Ein weiteres Erfordernis, das bei Spritzgießmaschinen mit Indexplatten zu erfüllen ist, ist das Bereitstellen von Medien an der Indexplatte. Üblicherweise weisen die Drehwellen hierfür Durchführungen auf, meist in Form von axialen Bohrungen, die parallel zu einer Symmetrieachse der Drehwelle geführt sind und die sich über eine wesentliche Länge derselben erstrecken. Im Bereich der Indexplatte kann auf diese Kanäle, die der Durchführung von Temperiermitteln, Druckluft, elektrischen Versorgungsleitungen oder dergleichen dienen, zugegriffen werden. Zum Einspeisen der Medien werden im allgemeinen sogenannte Drehdurchführungen verwendet, die es erlauben, einen relativ zu ihnen rotierenden Körper, hier die Drehwelle, in jeder Winkellage mit Medium zu versorgen. Solche Drehdurchführungen sind an sich bekannt, bei der Durchführung von flüssigen oder gasförmigen Medien können beispielsweise in einem drehfesten Gehäuse der Drehdurchführung Ringnuten vorgesehen sein, die mit einem Medienzu- bzw. -ablauf in Strömungsverbindung stehen. Das drehende Element, das von der Drehdurchführung zu versorgen ist, also beispielsweise die Drehwelle einer Indexplatte, kann dann an korrespondierenden Axialpositionen Stichbohrungen aufweisen, die in eine entsprechende axiale Bohrung münden. Da das drehende Element und die Drehdurchführung axial fest zueinander angeordnet sind kann so eine axiale Bohrung durchgehend, unabhängig von ihrer Winkelstellung relativ zur Drehdurchführung, über die Ringnut mit Medium versorgt werden. Es ist also unabhängig von dem Drehwinkel eine Strömungsverbindung zwischen Zu- bzw. Ablauf des Mediums und der entsprechenden axialen Bohrung herstellbar. Die Ringnuten können alternativ auch in dem drehenden Element vorgesehen werden.

Im Fall von Spritzgießmaschinen mit Indexplatten ist es üblich, eine Drehdurchführung für Medien im wesentlichen axial fest aber drehbar mit einer Drehwelle der Indexplatte zu verbinden und beim Ausüben des axialen Hubs vor einem Drehen der Indexplatte die Drehdurchführung gemeinsam mit der Drehwelle und der Indexplatte axial zu verfahren. Ein nicht verdrehbarer maschinenseitiger Auswerfermechanismus, der beispielsweise eine Kolbenstange oder eine Auswerferplatte als Aktuator aufweisen kann, wird hierzu über eine Kupplung drehbar mit der Drehwelle verbunden, dies erfolgt meist unter Zwischenschaltung der erwähnten Drehdurchführung. Eine zwischen Auswerfermechanismus und Drehdurchführung vorgesehene Verdrehsicherung, beispielsweise ein entsprechender Bolzen, stellt sicher, dass Auswerfermechanismus und Drehdurchführung sich nicht mit der Drehwelle drehen. Hierbei handelt es sich um eine relativ aufwendige Konstruktion, mit vielen gegeneinander zu sichernden Teilen. Insbesondere sind Wechsel von Indexplatten hier sehr arbeitsaufwendig, da die Drehwelle einer eingetauschten Indexplatte wieder mit einer Drehdurchführung versehen, fest mit dieser verankert und diese dann an den Auswerfermechanismus gekuppelt werden muss.

Ausgehend von den vorgenannten Nachteilen liegt der Erfindung die Aufgabe zugrunde, eine Spritzgießmaschine mit einer maschinenseitigen Auswerferplatte vorzustellen, wobei die Auswerferplatte axial relativ zu einer Werkzeugaufspannplatte der Spritzgießmaschine verfahrbar ist, wobei eine solche Auswerferplatte einfach auch auf Standardspritzgießmaschinen nachrüstbar ist, so dass diese mit einer Indexplattenfunktionalität ausstattbar sind. Ferner soll ein leichteres Wechseln verschiedener Spritzgießwerkzeuge mit Indexplattenfunktionalität bzw. verschiedener Indexplatten relativ zu einem Werkzeug an einer Spritzgießmaschine ermöglicht werden. Die Wartbarkeit soll verbessert und der verfügbare Raum vergrößert werden. Eine weitere der Erfindung zugrundeliegende Aufgabe besteht darin, eine Spritzgießmaschine anzugeben, die im wesentlichen mit Standard-Werkzeugaufspannplatten auskommt und die ohne größere Umbauten wechselweise für einen Indexplattenbetrieb (Mehrkomponenten- bzw. Mehrfarbenspritzgießen) und für einen Betrieb ohne Indexplatte verwendet werden kann.

Diese Aufgaben werden durch eine Spritzgießmaschine mit den Merkmalen der Ansprüche 1-10 gelöst.

Erfindungsgemäß wird eine Spritzgießmaschine mit einer maschinenseitigen Auswerferplatte, wie sie im Gegensatz zu werkzeugseitigen Auswerfermechanismen zu verstehen ist, die im wesentlichen auf der werkzeugzugewandten Seite einer Werkzeugaufspannplatte oder innerhalb einer Werkzeughälfte vorgesehen sind, vorgestellt, die axial relativ zu der beweglichen Werkzeugaufspannplatte verfahrbar ist, in deren Werkzeughälfte eine Indexplatte gegen diese axial verschieblich und verdrehbar aufgenommen ist. Diese Auswerferplatte zeichnet sich dadurch aus, dass eine Verschiebung derselben entlang einer Längsachse der Spritzgießmaschine über eine Drehwelle zumindest mittelbar auf die Indexplatte übertragbar ist. Hierbei ist die Indexplatte mit der Drehwelle verbunden oder drehfest verbindbar, und ein Drehantrieb zum rotatorischen Antreiben der Indexplatte über die Drehwelle kann an oder in der maschinenseitigen Auswerferplatte vorgesehen sein. Hierdurch lässt sich vorteilhafterweise Einbauraum sparen, da eine Auswerferplatte meist standardmäßig an Spritzgießmaschinen vorgesehen ist, der für sie benötigte Platz also bereits einkalkuliert ist. So kann beispielsweise auf eine Zwischenplatte für das Vorsehen eines Drehantriebs für eine Indexplatte verzichtet werden, die die verfügbare Werkzeugeinbauhöhe verringert. Auch gegenüber anderen bekannten Vorrichtungen ist diese Gestaltung vorteilhaft, da durch das Vorsehen des Drehantriebs an der maschinenseitigen Auswerferplatte beispielsweise keine aufwendigen Anpassungen einer Werkzeughälfte oder einer Formaufspannplatte vorgenommen werden müssen, um einen Drehantrieb für eine Indexplatte vorzusehen, vielmehr kann im wesentlichen mit Standardkomponenten gearbeitet werden, sofern sie eine ausreichende Durchführungsbohrung zum Durchführen der Drehwelle der Indexplatte aufweisen und diese gegebenenfals drehbar und axial verschieblich an den jeweiligen Elementen lagerbar ist. So kann beispielsweise eine herkömmliche Spritzgießmaschine durch Austauschen der vorgesehenen maschinenseitigen Auswerferplatte gegen eine erfindungsgemäße Auswerferplatte einfach zu einer Spritzgießmaschine umgerüstet werden, die ein Werkzeug mit Indexplatte bedienen kann.

Als Drehantrieb kann beispielsweise ein Servomotor, ein Hydromotor oder auch ein elektrischer Direktantrieb vorgesehen sein. Das Drehmoment kann von der Ausgangswelle des Motors beispielsweise über einen Riemenantrieb oder Zahnräder auf die Drehwelle übertragbar sein. Im Falle eines Direktantriebs kann die Drehwelle beipielsweise über Nuten mit einer Hohlwelle im Eingriff stehen oder aber an eine Ausgangswelle drehfest angeflanscht sein.

Ein solcher Drehantrieb kann beispielsweise auf einer Seitenfläche der Auswerferplatte vorgesehen sein, hier bevorzugt auf einer der beweglichen Werkzeugaufspannplatte abgewandten Seite, um die axiale Relativbewegung von Auswerferplatte und Werkzeugaufspannplatte nicht stark einzuschränken. Vorteilhaft kann der Drehantrieb auch in einem Randbereich oder an einer Schmalseite der Auswerferplatte vorgesehen sein, beispielsweise im wesentlichen von der Spritzgießmaschinenlängsachse abgesetzt. So kann ausreichend Raum auf der der Werkzeugaufspannplatte abgewandten Seite der Auswerferplatte beispielsweise für Schließmechanismen der Spritzgießmaschine wie Kniehebel gewahrt werden. Dies ist insbesondere im Fall des Nachrüstens einer solchen Auswerferplatte von Vorteil, da so eine Änderung der bestehenden Installationen gering gehalten werden kann.

Vorteilhafterweise kann die mit der Indexplatte verbundene oder verbindbare Drehwelle axial fest und drehbar in oder an der erfindungsgemäßen Auswerferplatte lagerbar sein. Über eine solche Lagerung kann der Axialhub zwischen Auswerferplatte und Werkzeugaufspannplatte auf die Indexplatte übertragbar sein. Dieser Axialhub kann beispielsweise über zwischen Auswerferplatte und Werkzeugaufspannplatte wirksame Hydraulikzylinder erzeugbar sein, Mechanismen zum Erzeugen dieses Axialhubs gehören an sich zum Stand der Technik. Die Lagerung erfolgt vorzugsweise im wesentlichen innerhalb der Auswerferplatte, kann aber auch an diese beispielsweise angeflanscht sein. Hierbei können beispielsweise Kugelrollenlager zum Einsatz kommen.

Besonders bevorzugt können Kraftübertragungselemente zum Übertragen des Drehmoments von dem Drehantrieb auf die mit der Indexplatte verbundene oder verbindbare Welle, wie beispielsweise ineinander greifende Zahnräder oder ein Riementrieb, im wesentlichen innerhalb der Auswerferplatte vorgesehen sein. Auf diese Weise kann weiterer Einbauraum gespart werden, die Lärmbelästigung sowie die Gefährdung durch bewegte Teile weiter reduziert werden.

Vorteilhafterweise kann die Auswerferplatte mehrteilig ausgeführt sein, so dass Drehantrieb und/oder Kraftübertragungselemente und/oder Lagerung der Welle in Ausnehmungen der zusammenfügbaren Teile der Auswerferplatte unterbringbar sind. Durch Zusammenfügen zweier oder mehrerer Teile, insbesondere in Form von Teilplatten, kann einfach eine erfindungsgemäße Auswerferplatte bereitstellbar sein, die Ausnehmungen für die unterschiedlichen Elemente aufweisen kann. Diese Ausnehmungen können beispielsweise durch einfaches Ausfräsen oder Aussägen in entsprechenden Teil- und/oder Zwischenplatten bereitstellbar sein.

Gemäß einer vorteilhaften Ausgestaltung der Erfindung kann eine, an sich bekannte, Drehdurchführung für Medien zum Durchführen von Medien durch die Drehwelle zu der Indexplatte mit der Auswerferplatte verbunden sein. Die Drehdurchführung kann beispielsweise fest an der Auswerferplatte angeflanscht sein. Hierdurch kann einfach ein Verdrehen zwischen Auswerferplatte und Drehdurchführung vermieden werden, eine Lagerung der Drehdurchführung an der Auswerferplatte kann diese vor Beschädigungen besser schützen und eine leichtere Zu- bzw. Abführung von Medien gewährleisten. Vorteilhaft hieran ist, dass die Drehdurchführung nicht länger nur axial fest mit der Drehwelle verankert ist, sondern durch die Verbindung mit der Auswerferplatte zusätzlich stabilisiert werden kann. Insbesondere kann so eine stabile Verbindung zwischen Auswerferplatte, Drehdurchführung und Drehwelle bereitstellbar sein, bei voller Drehbeweglichkeit der Drehwelle relativ zu Auswerferplatte und Drehdurchführung.

Ein solches erfindungsgemäßes Vorsehen einer festen Verbindung zwischen Auswerferplatte und Drehdurchführung kann auch bei konventionell vorgesehenen Drehantrieben für die Drehwelle sehr vorteilhaft sein. Es ist also auch denkbar eine Auswerferplatte nur mit einer Lagerung der Drehwelle und einer mit ihr verbundenen Drehdurchführung auszustatten und einen herkömmlichen Drehantrieb für die Drehbewegung der Drehwelle vorzusehen, ohne den Rahmen der Erfindung zu verlassen.

Besonders vorteilhafterweise kann die Medienzuführung zu der Drehdurchführung, also Zu- bzw. Ablaufleitungen zum Versorgen der Drehdurchführung mit den jeweiligen Medien, zumindest teilweise innerhalb der Auswerferplatte vorgesehen sein. So können innerhalb der Auswerferplatte beispielsweise Zuführungsbohrungen zu der Drehdurchführung angebracht sein, durch die die Zu- bzw. Abführung der Medien erfolgen kann. Insbesondere bei mehrteiliger Auswerferplatte können solche Kanäle einfach anbringbar sein. Vorteilhaft hieran ist insbesondere, dass so der Raum zwischen Auswerferplatte und Werkzeugaufspannplatte im wesentlichen von Versorgungsleitungen freihaltbar ist. Die Kanäle können beispielsweise erst im Randbereich mit flexiblen Leitungen mit Medien versorgbar sein. Durch kürzere, weniger bewegte, oft flexible Leitungen minimiert sich beispielsweise das Leckagerisiko und die Übersichtlichkeit im Einbauraum nimmt zu.

Besonders vorteilhafterweise kann die Drehwelle mehrteilig, insbesondere zweiteilig ausgebildet sein, wobei die Teile lösbar miteinander derart verbindbar sind, dass das Drehmoment von dem Drehantrieb über die Drehwelle auf die Indexplatte übertragbar ist. Auch Durchführungskanäle innerhalb der Drehwelle sollten bei Vorhandensein dichtend miteinander verbindbar sein, so dass eine durchgängige Strömungsverbindung zwischen den Medienzu- und -abläufen und entsprechenden Anschlüssen an der Indexplatte gewährleistbar ist. Die Verbindung der bevorzugt zwei Teilstücke der Drehwelle kann beispielsweise über entsprechende Flanschelemente, eine entsprechende drehmomentübertragende Verbindung über eine innenliegende Bohrung oder ähnliche mechanische Verbindungen erfolgen.

Durch Vorsehen dieser erfindungsgemäßen Mehrteiligkeit der Drehwelle kann eine leichte Wechselbarkeit der Indexplatte mit dem angrenzenden Drehwellenteil gewährleistbar sein. So kann nur die Indexplatte samt angrenzenden Drehwellenteil getauscht werden, während das Drehwellenteil auf der Auswerferplattenseite fest gelagert bleiben kann. Es sind also lediglich die Verbindungen zwischen den einzelnen Drehwellenteilen zu lösen, während der Drehantrieb der Welle, die eventuelle Lagerung der Drehwelle an der Auswerferplatte und gegebenenfalls eine Drehdurchführung für Medien und deren Anpassung an den Auswerferplattenseitigen Teil der Drehwelle sowie deren Zuführungen unverändert bleiben können. Eine solch einfache Tauschbarkeit war bisher insbesondere durch die meist starre axiale Verankerung zwischen Drehdurchführung und Drehwelle nicht gegeben. Gegebenenfalls kann eine solche Mehrteiligkeit der Drehwelle auch unabhängig von der Anordnung des Drehantriebs für die Erzeugung der Drehbewegung der Indexplatte vorgesehen sein, der wiederum konventionell anordenbar ist.

Gemäß einer weiteren vorteilhaften Weiterbildung der Erfindung kann ein Winkelgeber zum Bestimmen eines Drehwinkels zwischen der Auswerferplatte und der Welle vorgesehen sein, so kann insbesondere bei Zwischenschaltung von Getrieben wie beispielsweise Zahnrädern die Genauigkeit in der Lagebestimmung der Indexplatte gegenüber einer Winkelmessung am Drehantrieb direkt sehr verbessert werden. Beispielsweise kann ein induktiver Taster mit einer entsprechenden, fest mit der Drehwelle verbundenen Nockenscheibe zur Bestimmung der Drehposition der Indexplatte eingesetzt werden.

Die Erfindung betrifft eine Spritzgießmaschine mit einer Werkzeugaufspannplatte, einem Spritzgießwerkzeug und einer gegenüber diesem axial und rotatorisch verfahrbaren Indexplatte, sowie einer Auswerferplatte, wobei eine axiale Bewegung zwischen Auswerferplatte und Werkzeugaufspannplatte über eine Welle auf die Indexplatte übertragbar ist, bei der eine Aufspannplatte mit einem oder mehreren der oben genannten erfindungsgemäßen Merkmale zum Einsatz kommen kann. Vorteilhaft an einer solchen Spritzgießmaschine ist die leichte Umrüstbarkeit sowie die weiteren bereits genannten Vorteile.

Nachfolgend soll die Erfindung anhand zweier Ausführungsbeispiele und unter Bezugnahme auf die Figuren näher erläutert werden. Es zeigen:
- Fig.1:: Längschnitt durch eine Auswerferplatte mit Teilen der Drehwelle und beweglicher Werkzeugaufspannplatte, mit zwei Verbindungsalternativen für die Teile der Drehwelle;
- Fig. 1a:: Schnitt durch die Drehwelle senkrecht zu einer Maschinenlängsachse;
- Fig. 2:: Draufsicht auf einen Teil einer erfindungsgemäßen Auswerferplatte;

In Figur 1 ist ein Teil einer Spritzgießmaschine mit einer erfindungsgemäßen Auswerferplatte im Längsschnitt dargestellt. Eine bewegliche Werkzeugaufspannplatte 1 weist eine Durchführung für eine Drehwelle 4 auf, die mit einer nicht dargestellten Indexplatte drehfest verbunden ist. Diese ist in einer rechts an der Werkzeugaufspannplatte halterbaren, ebenfalls nicht dargestellten Werkzeughälfte drehbar und axial verschieblich aufnehmbar. In Figur 1a ist diese Drehwelle im Schnitt dargestellt, es sind zwei Medienkanäle 6, 6' erkennbar, durch die ein Medium wie Temperierflüssigkeit zur Indexplatte hin und wegführbar ist. Diese Kanäle 6 sind in Figur 1 erkennbar, sie durchsetzen die Drehwelle achsparallel und enden in Stichbohrungen 6a. In einer Auswerferplatte 2, die axial relativ zu der Werkzeugaufspannplatte 1 bewegbar ist, steht die Drehwelle 4 über Nuten im Eingriff mit einem Zahnrad 18. Über Lager 16 sind Zahnrad 18 und Drehwelle 4 in Ausnehmungen der Auswerferplatte 2 drehbar gelagert. Die Auswerferplatte 2 ist zweiteilig ausgebildet, so dass sich die Ausnehmungen beispielsweise durch Fräsen erzeugen lassen. Mit der Auswerferplatte 2 ist eine Drehdurchführung 10 verbunden, die über Ringnuten 12 mit den Stichbohrungen 6a unabhängig von der Drehposition in Strömungsverbindung steht. Weitere Nuten, die mit nicht dargestellten weiteren Kanälen in Strömungsverbindung stehen können, sind durch Dichtungen getrennt, axial versetzt vorgesehen. Die Drehdurchführung 10 ist durch in der Auswerferplatte 2 vorgesehene Zuführungsbohrungen 14 mit Medien versorgbar. An der Drehdurchführung 10 ist ein induktiver Taster 22 zum Bestimmen einer Drehposition einer mit der Drehwelle 4 fest verbundenen Nockenscheibe 20 vorgesehen.

Die Drehwelle 4 ist zweiteilig ausgeführt, der auswerferplattenseitige Teil 4a und der indexplattenseitige Teil 4b sind durch eine mechanische Verbindung 8 drehfest und mediendicht verbunden. Im oberen Teil ist diese Verbindung als Flansch ausgeführt, im unteren als Innengewinde.

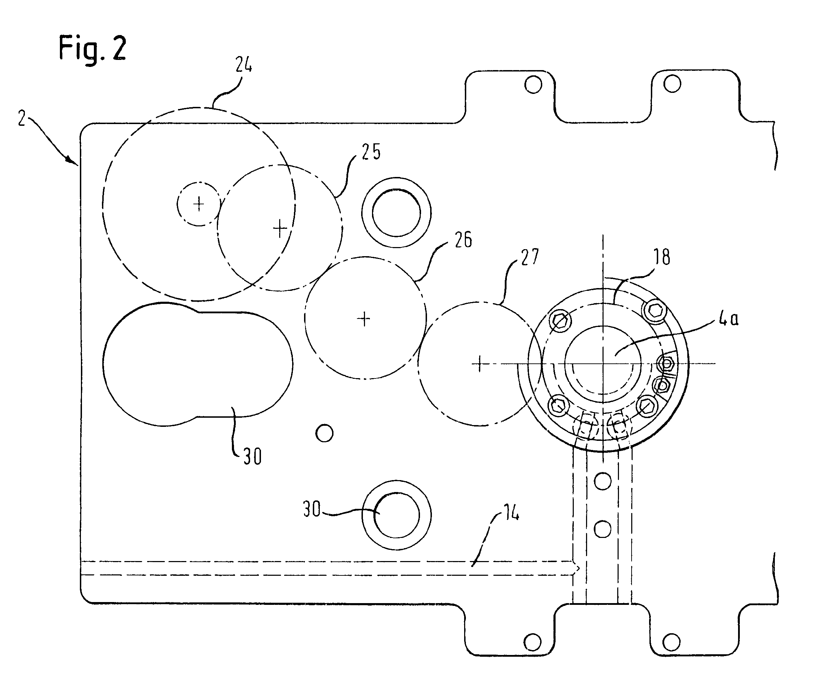

Figur 2 zeigt eine Draufsicht auf die Auswerferplatte 2, ein Drehantrieb 24 ist in einem Seitenbereich an der Auswerferplatte 2 vorgesehen, über Zahnräder 25, 26, 27 steht er im Eingriff mit dem Zahnrad 18, das drehfest mit der Drehwelle 4 verbunden ist.

Im Betrieb kann eine Spritzgießmaschine mit einer solchen Auswerferplatte 2 besonders vorteilhaft betrieben werden.

### Bezugszeichenliste

- 1: Werkzeugaufspannplatte
- 2: Auswerferplatte
- 2a, b: Teile der Auswerferplatte
- 4: Drehwelle
- 4a: Drehwelle, Auswerferplattenseitiger Teil
- 4b: Drehwelle, Indexplattenseitiger Teil
- 6: Medienkanal
- 8: Verbindung
- 10: Drehdurchführung
- 12: Ringnuten
- 14: Medienzuführung
- 12: Auswerferplatte
- 16: Lagerung
- 18: Zahnrad
- 20: Nockenscheibe
- 22: induktiver Taster
- 24: Drehantrieb
- 25,26,27: Zahnräder
- 30: Durchbrüche

## Patentansprüche

1. Spritzgießmaschine mit einer Werkzeugaufspannplatte (1), einem Spritzgießwerkzeug und einer gegenüber diesem axial und rotatorisch verfahrbaren Indexplatte, sowie einer maschinenseitigen Auswerferplatte (2), wobei eine axiale Bewegung zwischen Auswerferplatte (2) und Werkzeugaufspannplatte (1) über eine Drehwelle (4) auf die Indexplatte übertragbar ist, **dadurch gekennzeichnet, dass**
ein Drehantrieb (24) zum rotatorischen Antreiben der Indexplatte über die Drehwelle (4) an oder in der maschinenseitigen Auswerferplatte (2) vorgesehen ist.

2. Spritzgießmaschine nach Anspruch 1,
**dadurch gekennzeichnet, dass** die
Drehwelle (4), die mit der Indexplatte verbunden oder verbindbar ist, axial fest und drehbar in oder an der Auswerferplatte (2) lagerbar ist.

3. Spritzgießmaschine nach Anspruch 1 oder 2,
**dadurch gekennzeichnet, dass**
Kraftüberfragungselemente zum Übertragen des Drehmoments von dem Drehwelle (4) innerhalb der Auswerferplatte (2) vorgesehen sind.

4. Spritzgießmaschine nach einem der Ansprüche 1 - 3,
**dadurch gekennzeichnet, dass**
die Auswerferplatte (2) mehrteilig ausgeführt ist, so dass Drehantrieb (24) und/oder Kraftübertragungselemente und/oder Lagerung (16) der Drehwelle (4) in Ausnehmungen der zusammenfügbaren Teile (2a, 2b) der Auswerferplatte (2) unterbringbar sind.

5. Spritzgießmaschine nach einem der Ansprüche 1 - 4,
**dadurch gekennzeichnet, dass**
eine Drehdurchführung (10) für Medien zum Durchführen von Medien durch die Drehwelle (4) zu der Indexplatte mit der Auswerferplatte (2) verbunden ist.

6. Spritzgießmaschine nach Anspruch 5,
**dadurch gekennzeichnet, dass**
eine Medienzuführung zu der Drehdurchführung (10) zumindest teilweise durch die Auswerferplatte (2) erfolgt.

7. Spritzgießmaschine nach einem der Ansprüche 1- 6,
**dadurch gekennzeichnet, dass**
die Drehwelle (4) zweiteilig ausgebildet ist und die beiden Teile (4a, 4b) lösbar miteinander verbindbar sind, wobei das Drehmoment von dem Drehantrieb (24) auf die Indexplatte übertragbar ist.

8. Spritzgießmaschine nach einem der Ansprüche 5 - 7,
**dadurch gekennzeichnet, dass**
Medien von der Drehdurchführung (10) über den auswerferplattenseitigen Teil (4a) und den indexplattenseitigen Teil (4b) der Drehwelle (4) zu der Indexplatte durchführbar sind.

9. Spritzgießmaschine nach einem der Ansprüche 1 - 8,
**dadurch gekennzeichnet, dass**
vorsehbar sind.

10. Spritzgießmaschine nach einem der Ansprüche 1-9,
**dadurch gekennzeichnet, dass**
ein Winkelgeber zum Bestimmen eines Drehwinkels zwischen der Auswerferplatte (2) und der Drehwelle (4) vorgesehen ist.

## Claims

1. Injection molding machine comprising a mold mounting plate (1), a mold half, an indexing plate constructed for connection to the rotatable shaft and rotatable and axially movable in relation to the mold half as well as a machine-side ejector plate (2), wherein an axial movement between the ejector plate (2) and the mold mounting plate(1) is transmittable to the indexing plate via a rotatable shaft (4), **characterized in that**
a rotary drive (24) is provided on or in the ejector plate (2), for rotating the indexing plate via the rotatable shaft (4).

2. Injection molding machine according to claim 1,
**characterized in that**
the rotatable shaft (24), which is connected to the indexing plate, is supportable in axially fixed and rotatable engagement in or on the ejector plate (2)

3. Injection molding machine according to claim 1 or 2,
**characterized in that**
force transmitting means for transmitting a torque from the rotary drive (24) to the rotatable shaft (4) connected to the indexing plate are provided within the ejector plate (2).

4. Injection molding machine according to one of claims 1-3,
**characterized in that**
the ejector plate (2) is made of several parts to allow accommodation of the rotary drive (24) and/or the force transmitting elements and/or bearing of the rotatable shaft (4) in recesses of the joinable parts (2a, 2b) of the ejector plate (2).

5. Injection molding machine according to one of claims 1-4,
**characterized in that**
a rotary feedthrough (10) for fluids is connected to the ejector plate (2) for the passage of fluids via the rotatable shaft (4) to the indexing plate.

6. Injection molding machine according to claim 5,
**characterized in that**
the fluid feed to the rotary feedthrough (1) takes place at least partially through the ejector plate (2).

7. Injection molding machine according to one of claims 1-6,
**characterized in that**
the rotatable shaft (4) is two-parts and that the two portions (4a, 4b) are detachably connectable to one another, the torque from the rotary drive (2) being transmittable to the indexing plate

8. Injection molding machine according to one of claims 5-7,
**characterized in that**
fluids are flowable from the rotary feedthrough (1) via the ejector plate-side portion (4a) and the indexing plate-side portion (4b) of the rotatable shaft (4) to the indexing plate

9. Injection molding machine according to one of claims 1-8,
**characterized in that**
the rotary drive (24) is designed as a hydraulic motor, a servo motor or a direct drive.

10. Injection molding machine according to one of claims 1-9,
**characterized in that**
an angle transmitter for ascertaining an angle or rotation is provided between the ejector plate (2) and the rotatable shaft (4).

## Revendications

1. Machine de moulage par injection comprenant un plateau pour la fixation d'un outil (1), un outil de moulage par injection et un plateau d'indexation pouvant être déplacé axialement et en rotation par rapport à celui-ci, ainsi qu'un plateau d'éjection (2) attenant à la machine, un déplacement axial entre le plateau d'éjection (2) et le plateau pour la fixation de l'outil (1) pouvant être transmis au plateau d'indexation par l'intermédiaire d'un arbre de rotation (4), **caractérisée en ce**
**qu'**un entraînement rotatif (24) est prévu, par l'intermédiaire de l'arbre de rotation (4), sur ou dans le plateau d'éjection (2) attenant à la machine pour l'entraînement en rotation du plateau d'indexation.

2. Machine de moulage par injection selon la revendication 1
**caractérisée en ce que**
l'arbre de rotation (4), qui est relié ou peut être relié au plateau d'indexation, est fixe axialement et peut être tourné dans ou contre le plateau d'éjection (2) pour pouvoir y être logé.

3. Machine de moulage par injection selon les revendications 1 ou 2
**caractérisée en ce que**
des éléments de transmission de forces sont prévus pour la transmission du moment de rotation de l'entraînement de rotation (24) vers l'arbre de rotation (4), relié au plateau d'indexation, logé dans le plateau d'éjection (2).

4. Machine de moulage par injection selon l'une des revendications 1-3
**caractérisée en ce que**
le plateau d'éjection (2) est conçu en plusieurs parties de sorte que l'entraînement de rotation (24) et/ou les éléments de transmission de la force et/ou le logement (16) de l'arbre de rotation (4) peuvent être disposés dans des évidements des parties pouvant être assemblées (2a, 2b) du plateau d'éjection (2).

5. Machine de moulage par injection selon l'une des revendications 1-4
**caractérisée en ce**
**qu'**un passage tournant (10) pour des milieux pour le passage de milieux est relié au plateau d'indexation par l'intermédiaire de l'arbre de rotation (4).

6. Machine de moulage par injection selon la revendication 5
**caractérisée en ce**
**qu'**une alimentation des milieux vers le passage tournant (10) est effectuée au moins partiellement par l'intermédiaire du plateau d'éjection (2).

7. Machine de moulage par injection selon l'une des revendications 1-6
**caractérisée en ce que**
l'arbre de rotation (4) est conçu en deux parties et que les deux parties (4a, 4b) peuvent être reliées et détachées l'une de l'autre, le moment de rotation étant transposable de l'entraînement de rotation (24) vers le plateau d'indexation.

8. Machine de moulage par injection selon l'une des revendications 5-7
**caractérisée en ce que**
des milieux peuvent être mis en oeuvre à partir du passage tournant (10) par l'intermédiaire de la partie du côté du plateau d'éjection (4a) et de la partie du côté du plateau d'indexation (4b) de l'arbre de rotation (4) vers le plateau d'indexation.

9. Machine de moulage par injection selon l'une des revendications 1-8
**caractérisée en ce que**
qu'en tant qu'entraînement de rotation (24), on peut prévoir un moteur hydraulique, un servomoteur ou un entraînement direct.

10. Machine de moulage par injection selon l'une des revendications 1-9
**caractérisée en ce**
**qu'**un indicateur angulaire pour la détermination d'un angle de rotation est prévu entre le plateau d'éjection (2) et l'arbre de rotation (4).
